**Europäisches Patentamt**

**European Patent Office**

**Office européen des brevets**

(19)

(11) Veröffentlichungsnummer: **0 267 353**
**B1**

(12) **EUROPÄISCHE PATENTSCHRIFT**

(45) Veröffentlichungstag der Patentschrifft:
**21.03.90**

(21) Anmeldenummer: **87103474.0**

(22) Anmeldetag: **11.03.87**

(51) Int. Cl. ⁵: **F 16 J 15/32**

(54) **Kassettendichtung.**

(30) Priorität: **11.11.86 DE 3638515**

(43) Veröffentlichungstag der Anmeldung:
**18.05.88 Patentblatt 88/20**

(45) Bekanntmachung des Hinweises auf die Patenterteilung:
**21.03.90 Patentblatt 90/12**

(84) Bennante Vertragsstaaten:
**AT BE CH DE ES FR GB IT LI NL SE**

(56) Entgegenhaltungen:
**EP-A-0 157 904**
**GB-A-2 151 719**
**US-A-3 275 333**

(73) Patentinhaber: **Firma Carl Freudenberg**
**Höhnerweg 4**
**D-6940 Weinheim/Bergstrasse (DE)**

(72) Erfinder: **Freiwald, Gerhard**
**Gleiwitzer Strasse 7**
**D-6944 Hemsbach (DE)**

(74) Vertreter: **Weissenfeld-Richters, Helga, Dr.**
**Höhnerweg 2**
**D-6940 Weinheim/Bergstrasse (DE)**

**Beschreibung**

Die Erfindung betrifft eine Kassettendichtung nach dem Oberbegriff von Anspruch 1.

Eine solche Kassettendichtung ist aus der DE-OS-3 414 008 bekannt. Sie zeigt insbesondere bei hohen Wellendrehzahlen wenig befriedigende Gebrauchseigenschaften.

Der Erfindung liegt die Aufgabe zugrunde, eine Kassettendichtung der eingangs genannten Art derart weiterzuentwickeln, daß sich bei hohen Wellendrehzahlen wesentlich verbesserte Gebrauchseigenschaften ergeben. Die erfindungsgemäße Kassettendichtung soll insbesondere bei hohen und gegebenenfalls wechselnden Drehzahlen einen stark reduzierten Verschleiß und somit eine verbesserte Gebrauchsdauer haben.

Diese Aufgabe wird erfindungsgemäß bei einer Kassettendichtung der eingangs genannten Art mit den kennzeichnenden Merkmalen von Anspruch 1 gelöst. Auf vorteilhafte Ausgestaltungen nehmen die Unteransprüche bezug.

Bei der erfindungsgemäßen Kassettendichtung ist die Spaltverbindung zwischen dem Ringraum und dem abgedichteten Raum hinsichtlich ihres Querschnittes auf der von dem Flansch abgewandten Seite in gleichmäßig auf dem Umfang verteilten Segmentausschnitten des Außenringes aufgeweitet, wodurch sich in ihrem Bereich eine Kanalverbindung zwischen dem Ringraum und dem abzudichtenden Raum ergibt. Das durch die Drehbewegung des mit der abzudichtenden Welle umlaufenden Flansches des Innenringes der Einwirkung von Fliehkräften ausgesetzte, in dem Ringraum enthaltene Volumen wird dadurch nicht nur in demselben umgewälzt, sondern ständig zu einem gewissen Anteil aus demselben herausgefördert.

Innerhalb des Ringraumes entsteht dadurch unter normalen Betriebsbedingungen ein gewisses Vakuum, was durch die kanalartig ausgebildeten Segmentausschnitte des Außenringes aus dem abgedichteten Raum ständig aufgefüllt wird. Das unter normalen Betriebsbedingungen an der Dichtlippe vorbeigeführte Flüssigkeitsvolumen wird dadurch ständig erneuert, was eine unzulässige Erwärmung oder die Kumulation von Fremdstoffen weitgehend ausschließt. Auch Anbackungserscheinungen sind daher im Bereich der Dichtlippe keinesfalls mehr zu befürchten.

Der vorstehend beschriebene Effekt ist drehzahlabhängig, d. h. er erfährt mit zu nehmendem Anstieg der Drehzahl der abzudichtenden Welle eine Steigerung. Auch mit höchsten Drehzahlen umlaufende Wellen lassen sich dadurch unter Verwendung der erfindungsgemäßen Kassettendichtung zuverlässig abdichten.

Die Segmentausschnitte sollten möglichst eine Tiefe haben, die wenigstens doppelt so groß ist wie die Tiefe des benachbarten Spaltes. Für den Bereich des normalen Maschinenbaues haben sich Ausführungen besonders gut bewährt, bei deren die Segmentausschnitte eine Tiefe haben, die wenigstens fünfmal so groß ist wie die Tiefe des benachbarten Spaltes.

In Umfangsrichtung sollten die Segmentausschnitte eine Erstreckung haben, die in etwa mit ihrem gegenseitigen Abstand übereinstimmt. Eine gleichmäßige Beaufschlagung der Dichtlippe auf dem gesamten Umfang mit frischem, unverbrauchtem, abzudichtendem Medium wird hierdurch besonders begünstigt.

Die Segmentausschnitte sollen möglichst so angeordnet und ausgebildet sein, daß das gesamte, in dem Ringraum enthaltene Flüssigkeitsvolumen eine kontinuierliche Erneuerung erfährt.

Strömungsmäßige Toträume sind unter diesem Gesichtspunkt möglichst zu vermeiden, was beispielsweise auch dadurch gelingen kann, daß die Segmentausschnitte an dem dem Ringraum zugewandten Ende mit einem Mündungstrichter versehen sind.

Um einen möglichst zügigen Flüssigkeitsaustausch des im Ringraum enthaltenen Volumens zu erhalten, hat es sich als vorteilhaft bewährt, wenn die den Ringraum in axialer Richtung begrenzenden Flächen einerseits des Flansches und andererseits des Außenringes zumindest teilweise mit einer Leitschaufelbewehrung versehen sind. Diese muß, falls auf der Seite des Flansches zur Anwendung gelangend, eine in radialer Richtung nach außen wirksame Förderrichtung haben, auf der gegenüberliegenden Seite hingegen eine nach innen weisende Förderrichtung. Eine Anlehnung der Gestalt bekannter Vorbilder aus dem Pumpenbau ist möglich.

Der Austausch des in dem Ringraum enthaltenen Flüssigkeitsvolumens läßt sich dadurch beschleunigen; daß den Segmentausschnitten gleichmäßig auf dem Umfang verteilte Verbindungsöffnungen parallel geschaltet sind und daß die Verbindungsöffnungen den Flansch zwischen der Dichtlippe und dem Außenumfang axial durchdringen. Durch die Verbindungsöffnungen kann zusätzliche, neue Flüssigkeit in den Ringraum eintreten und denselben im Bereich des Spaltes verlassende ersetzen.

Die erfindungsgemäße Kassettendichtung zeichnet sich durch eine ausgezeichnete Unempfindlichkeit und Robustheit aus sowie durch eine hervorzuhebende Langlebigkeit. Sie bedarf keiner besonderen Sorgfalt bei der Montage, weshalb ihre Verwendung auch in Verbindung mit Montageautomaten ohne weiteres möglich ist.

Der Gegenstand der vorliegenden Erfindung wird nachfolgend anhand der als Anlage beigefügten Zeichnung weiter erläutert. Es zeigen:

Figur 1    eine Kassettendichtung, bei der der Außenring mit einer aus PTFE bestehenden Dichtlippe versehen ist

Figur 2    eine Ausführung ähnlich der Figur 1, bei der der Außenring mit einer den üblichen Radialwellendichtringen entsprechenden Dichtlippe versehen ist.

Figur 3    eine Ausführung, ähnlich Figur 2, bei der der Außenring mit einer Dichtlippe versehen ist, die an einer sich in radialer Richtung erstreckenden Gegenfläche des Innenringes anliegt.

Figur 4    eine Ausführung ähnlich Figur 1, bei der der Außenring in axialer Richtung beiderseits von in radialer Richtung nach außen vorspringenden Flanschen des Innenringes umschlossen ist

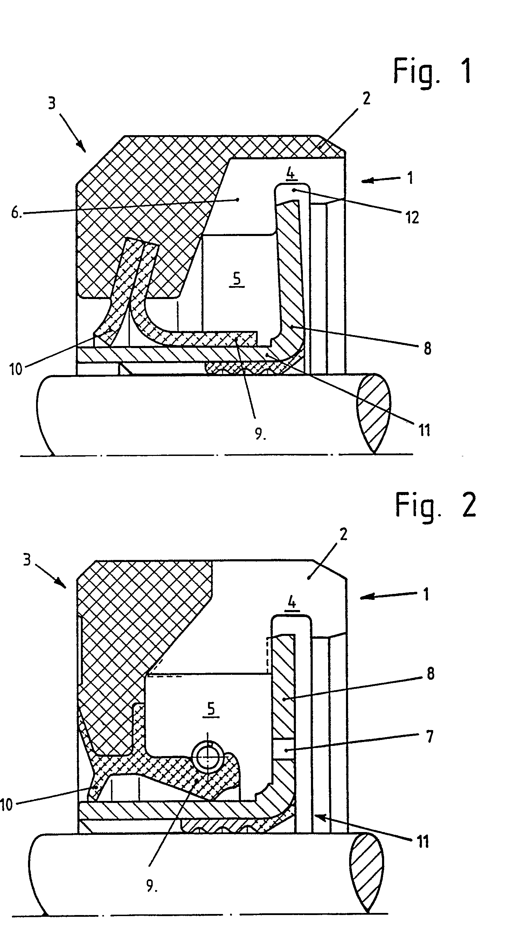

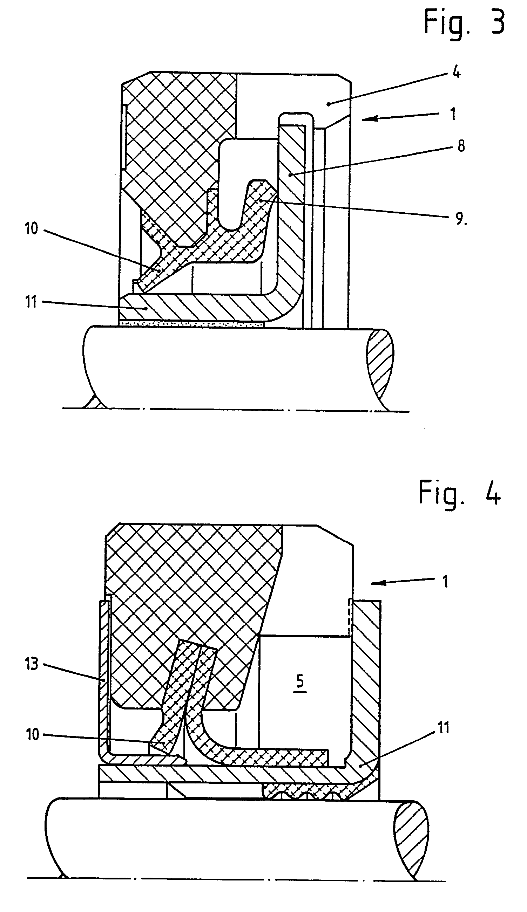

Die Kassettendichtung nach den Figuren 1 und 4 ist mit Außenringen 3 aus einem polymeren Werkstoff versehen. Sie sind in flüssigem Zustand an die aus PTFE bestehenden Dichtlippen 9 angeformt und anschließend verfestigt. Bei den Ausführungen nach den Figuren 2 und 3 bestehen die Dichtlippen 9 aus elastischem Werkstoff. Sie sind in flüssigem Zustand an die vorgeformten Außenringe 3 angeformt und anschließend verfestigt. Trotz der relativ komplizierten Gestalt ist dadurch eine wirtschaftliche Herstellung ohne weiteres möglich.

Bei der Ausführung nach Figur 1 weist der Außenring 3 außenseitig eine in sich geschlossene, kontinuierliche Zylinderfläche auf, was ihm eine große Robustheit verleiht.

Der axiale in Richtung des abgedichteten Raumes vorspringende Abschnitt 2 seines Profils ist innenseitig mit einer umlaufenden Nut 12 versehen, die den in radialer Richtung nach außen vorspringenden Flansch 8 des Innenringes 11 mit radialem und axialem Spiel umgreift und unverlierbar, jedoch relativ verdrehbar festhält. Die Nut 12 wird durch gleichmäßig auf dem Umfang verteilte Segmentausschnitte 4 durchbrochen, welche eine größere radiale Tiefe haben als die Nut 12. Die Segmentausschnitte 4 sind in axialer Richtung kanalartig ausgebildet und auf der dem Ringraum 5 zugewandten Seite mit einem Mündungstrichter 6 versehen.

Der Außenring 3 und der Innenring 11 haben ein entgegengesetztes, winkelförmiges Profil. Sie umschließen gemeinsam den Ringraum 5, welcher im Bereich seines Innenumfanges durch die aus PTFE bestehende Dichtlippe 9 des Außenrings 3 gegenüber dem Innenring abgedichtet ist. Des weiteren ist eine Staublippe 10 vorgesehen, die an derselben, kontinuierlich durchgehenden Zylinderfläche des Innenringes anliegt wie die Dichtlippe 9. Sie besteht aus Vliesstoff.

Während der bestimmungsgemäßen Verwendung der Kassettendichtung ist der Außenring 3 unverdrehbar in dem aufnehme den Gehäuse festgelegt und der Innenring 11 unverdrehbar auf der abzudichtenden Welle. Wird eine Drehbewegung in die Welle eingeleitet, so folgt der Flansch 8 des Innenringes 11 deren Drehbewegung und übt fliehkraftbedingt auf die ihn berührenden Flüssigkeitsbestandteile des in dem Ringraum 5 enthaltenen Volumens eine nach außen gerichtete Kraft aus. Das in dem Ringraum 5 enthaltene Flüssigkeitsvolumen wird dadurch in eine dem Uhrzeigersinn entgegengesetzte Drehbewegung versetzt, wodurch ständig neue Flüssigkeitsbestandteile aus rückwärtiger Richtung an der dynamischen Abdichtungszone der Dichtlippe 9 vorbeigeführt werden. Die Entsturung von Anbackungen im Dichtspalt wird hierdurch verhindert.

Zusätzlich verläßt ständig ein gewisses Flüssigkeitsvolumen über die Segmentausschnitte 4 den Ringraum 5, was zum Aufbau eines gewissen Vakuums in demselben führt. Dieses wird ergänzt über die äußeren Zonen der Segmentausschnitte 4, durch welche kontinuierlich frische, unverbrauchte Flüssigkeit aus dem abgedichteten Raum in den Ringraum 5 nachfließt. Ein Wärmestau oder die Kumulation von Fremdstoffen in dem Ringraum 5 wird hierdurch zuverlässig vermieden

Die in Figur 2 gezeigte Ausführung ist funktionell der vorstehend beschriebenen ähnlich. Die Segmentausschnitte 4 des Abschnittes 2 des Profils des Außenringes 3 bestehen in diesem Falle aus vollständigen Durchbrechungen des Abschnittes 2, was den für den Flüssigkeitsaustausch des Ringraumes 5 benötigten Kanalquerschnitt der Segmentausschnitte 4 nennenswert vergrößert. Weitere Flüssigkeit kann durch die gleichmäßig auf dem Umfang verteilten Verbindungsöffnungen 7, die durch Bohrungen gebildet sind, in den Ringraum 5 übertreten. Die Ausführung ist besonders geeignet für Anwendungsfälle, in denen mit erheblichen Belastungen zu rechnen ist. Die Dicht- und die Staublippen 9, 10 sind bei der Ausführung nach Figur 2 einstückig ineinander übergehend aus gummielastischem Werkstoff erzeugt. Sie entsprechen hinsichtlich ihrer Querschnittsgestalt den bekannten Radialwellendichtringen.

Die in Figur 3 gezeigte Ausführung unterscheidet sich von der in Figur 2 gezeigten Ausführung durch eine Modifizierung der Dichtlippe 9. Diese liegt an einer axialen Begrenzungsfläche des Flansches 8 an, was für Sonderfälle häufig erwünscht ist.

Die in Figur 4 gezeigte Ausführung ist konstruktiv sowie hinsichtlich ihrer Funktion der in Figur 1 gezeigten Ausführung ähnlich. Auch in diesem Falle sind die Segmentausschnitte indessen als vollständige, radiale Durchdringungen des Abschnittes 2 des Profils des Außenringes 3 ausgelegt, was einen beschleunigten Flüssigkeitsaustausch des Ringraumes 5 begünstigt. Ein zusätzlicher, unverdrehbar mit dem Innenring 11 verbundener Schleuderring 13 von winkelförmigem Profil gewährleistet die unverlierbare Verbindung zwischen dem Innen- und dem Außenring und einen zusätzlichen Schutz vor äußeren Schmutzbelastungen.

## Patentansprüche

1. Kassettendichtung, umfassend einen Außen- und einen Innenring (3, 11) von entgegengesetztem winkelförmigem Profil, die gemeinsam einen rechteckig begrenzten Ringraum (5) umschließen, wobei der Außenring (3) mit wenigstens einer an dem Innenring anliegenden Dichtlippe (9) versehen ist und mit einer Haltevorrichtung zur unverlierbaren, jedoch relativ verdrehbaren Festlegung an dem Innenring (3) und wobei eine

## EP 0 267 353 B1

Spaltverbindung (1) zwischen dem Ringraum (5) und dem abgedichteten Raum vorhanden ist, die auf der einen Seite durch einen mit dem Innenring (3) verbundenen Flansch (8) begrenzt ist, dadurch gekennzeichnet, daß die Spaltverbindung (1) hinsichtlich ihres Querschnittes auf der von dem Flansch (8) abgewandten Seite in gleichmäßig auf dem Umfang verteilten Segmentausschnitten (4) des Außenringes (3) aufgeweitet ist und daß die Segmentausschnitte (4) den Ringraum (5) und den abzudichtenden Raum verbindende Kanäle bilden.

2. Kassettendichtung nach Anspruch 1, dadurch gekennzeichnet, daß die Segmentausschnitte (4) eine Tiefe haben, die wenigstens doppelt so groß ist wie die Tiefe des benachbarten Spaltes (1).

3. Kassettendichtung nach Anspruch 1 bis 2, dadurch gekennzeichnet, daß die Segmentausschnitte (4) eine Erstreckung in Umfangsrichtung haben, die mit dem o,5 bis 3-fachen ihres gegenseitigen Abstandes übereinstimmt.

4. Kassettendichtung nach Anspruch 1 bis 3, dadurch gekennzeichnet, daß den Segmentausschnitten gleichmäßig auf dem Umfang verteilte Verbindungsöffnungen (7) parallel geschaltet sind und daß die Verbindungsöffnungen (7) den Flansch (8) zwischen der Dichtlippe (9) und dem Außenumfang axial durchdringen.

## Claims

1. A cartridge seal comprising an outer ring and an inner ring (3, 11) of contrasting angular profile, which together surround an annular space (5) with rectangular borders, the outer ring (3) being provided with at least one sealing lip (9) bearing against the inner ring and with a retaining device for firm, but relatively rotatable fixing to the inner ring (3) and a gap connection (1) being present between the annular space (5) and the sealed space, which gap connection (1) is bordered on the one side by a flange (8) connected to the inner ring (3), characterized in that the gap connection (1) is expanded in respect of its cross-section on the side facing away from the flange (8) in segment sections (4) of the outer ring (3), evenly distributed on the circumference, and in that the segment sections (4) form channels connecting the annular space (5) and the space to be sealed.

2. A cartridge seal according to claim 1, characterized in that the segment sections (4) have a depth which is at least twice as large as the depth of the adjacent gap (1).

3. A cartridge seal according to claim 1 or 2, characterized in that the segment sections (4) have an extent in circumferential direction which corresponds to 0.5 to 3 times their mutual distance.

4. A cartridge seal according to any of claims 1 to 3, characterized in that connection openings (7), evenly distributed on the circumference, are switched parallel to the segment sections, and in that the connection openings (7) penetrate the flange (8) axially between the sealing lip (9) and the outside circumference.

## Revendications

1. Joint à cassette comprenant une bague extérieure (3) et une bague intérieure (11) de profil angulaire opposé, qui entourent ensemble une enceinte annulaire (5) délimitée à angle droit, tandis que la bague extérieure (3) est pourvue d'au moins une lèvre d'étanchéité (9) appuyant sur la bague intérieure, et d'un dispositif de fixation pour l'assembler à la bague intérieure (3) de manière indissociable, mais tout en permettant une rotation relative et tandis qu'un jeu (1) existe entre l'enceinte annulaire (5) et l'enceinte à rendre étanche et est délimité par la bride (8) assemblée à la bague intérieure (3), caractérisé en ce que le jeu (1) est élargi pour ce qui concerne sa section sur le côté opposé à la bride (8) au moyen de parties en forme de segments (4) de la bague extérieure (3) réparties uniformément à la périphérie, et que les parties en forme de segments (4) constituent des canaux reliant l'enceinte annulaire (5) et l'enceinte à rendre étanche.

2. Joint à cassette selon la revendication 1, caractérisé en ce que les parties en forme de segments (4) ont une profondeur qui est au moins le double de la profondeur du jeu voisin (1).

3. Joint à cassette selon les revendications 1 et 2, caractérisé en ce que les parties en forme de segments (4) ont une extension en direction de la périphérie qui correspond à 0,5 à 3 fois leur distance mutuelle.

4. Joint à cassette selon les revendications 1 à 3, caractérisé en ce que les parties en forme de segments sont montées en parallèle avec des orifices de jonction (7) répartis uniformément sur la périphérie, et que les orifices de jonction (7) traversent axialement la bride (8) entre la lèvre d'étanchéité (9) et la périphérie extérieure.

4

Fig. 1

Fig. 2

Fig. 3

Fig. 4